# EUROPEAN PATENT SPECIFICATION

(11) **EP 3 294 051 B1**
(45) Date of publication and mention of the grant of the patent: **04.12.2019**
(21) Application number: 15723199.4
(22) Date of filing: 11.05.2015
(51) Int. Cl.: A01D 51/00

(54) **COLLECTION CONTAINER AND COLLECTING DEVICE**
SAMMELBEHÄLTER UND SAMMELVORRICHTUNG
RÉCIPIENT DE COLLECTE ET DISPOSITIF DE COLLECTE

(43) Date of publication of application: 21.03.2018
(73) Proprietor: Husqvarna AB, 561 82 Huskvarna (SE)
(72) Inventor: BROBEIL, Achim, 89160 Dornstadt (DE); MOCK, Axel, 89134 Blaustein (DE); SCHNEIDER, Regina, 89250 Senden (DE)
(74) Representative: Finkele, Rolf
(86) International application number: PCT/EP2015/060372
(87) International publication number: WO 2016/180470

(56) References cited:
- EP-A1- 2 773 179
- CN-A- 102 577 756
- US-A- 1 644 366
- US-A1- 2002 170 282
- US-B1- 6 460 249

## Description

The present application is directed to a collection container for example for picking up of fruits lying on the ground, and a corresponding collecting device.

Collecting objects, such as fruits like apples, pears, quinces or nuts, or similar objects from the ground is comparatively cumbersome if done manually.

Therefore, efforts have been made to at least partially ease picking up fruits from the ground. Reference is exemplarily made to EP 2 773 179 A1 which shows a fruit collector having a collecting basket made from a plurality of elastic wires. By moving the container over a fruit lying on the ground, the wires, where the fruits touch the basket are spread apart such that the fruit can enter the container through the basket wall made from the wires. The wires are mounted via axial clamping rings where ends of the wires are mechanically clamped. Adaptation of the basket to a certain constitution of objects, e.g. fruits, to be picked up may be obtained by using a respectively suitable number of wires which is obtained by mounting or dismounting wires to or from the basket. Mounting or dismounting wired to/from the basket, however, is comparatively cumbersome and time consuming.

A cylinder shaped collection container is described with US 2002/170282 A1 that is arranged to collect objects of certain constitution. A plurality of inwardly extending, resilient bristle like elements are arranged around the sleeve of the container. When pressed onto a fruit or other object extending the resilient force of the bristles these open-up the entrance of the container such that the fruits or objects can move inside it. This way they get collected. As long as gravitational force due to the weight of the collected fruits or objects is less than the resilient force of the bristles they stay within the collection container. As the bristles are accessible for outside one could alter their number and thus change the resulting resilient force and thus the property of the container's opening. To collect a multitude of objects the collection container has to be lifted and pushed down several times.

Therefore, it is an object of the invention to provide a collection container, and collecting device with improved operability and improved applicability. Particularly, a collection container, collection container assembly and collection device shall be provided, easing adaptation to requirements or needs of different objects.

This object in particular is solved by the features and subject matter of the independent claim. Embodiments result from respective dependent claims, and also from the description of embodiments as described hereinbelow.

In accordance with an aspect of the invention, embodiments of the invention are directed to a collection container that is configured to and arranged for collecting an object of a certain constitution from the ground, or a similar surface, by passing the object through a resilient grid defining a section of the collection container envelope, i.e. a section of an envelope, specifically outer envelope, of the collection container.

In accordance with a further aspect of the invention, a collecting device may be provided, the collecting device comprising a retaining unit fixedly supporting, or pivotably supporting for axial rotation, a collecting container according to any embodiment as described herein.

Embodiments of the collection container, and collecting device will be described hereinbelow.

In embodiments, the resilient grid is operable to be forced against the object to be collected to thereby, locally change a pre-set mesh-width or opening angle of the resilient grid by local resilient grid deformation, i.e. local resilient deformation of the grid.

In case of a barrel or rotational spheroid shape of the collecting container having wiry bars as defining the resilient grid, resilient deformation may for example comprise bending apart in circumferential direction a group of the wiry bars located in a contact area with the object. After having passed the object into the collecting container, the resilient deformation of the wiry bars may form back to re-establish a uniform mesh-structure

By local resilient grid deformation, e.g. by pushing apart neighboring wire bars of the grid, an object adequate for being collected can generate or induce a penetration passage sufficiently large for penetrating through the grid into the collection container.

The grid may comprise a first grid structure, such for example a predefined arrangement of first grid elements, such as wiry or wire bars. The grid may further comprise at least one second grid structure, which may similarly (but not mandatorily) implemented as a predefined arrangement of second grid elements, such as wiry or wire bars.

The first and second grid may be implemented in the form of gratings, respectively comprising a plurality of grid elements. Respective grid elements may be associated with, for example by a mechanical connection or by integrated design, respective retaining elements, for example implemented as hubs or hub sections.

The first and second grid structure, for example the grid elements and corresponding retaining elements, may establish sub-containers. Such sub-containers may in embodiments be implemented as interlaced components, meaning for example, that the first grid structure may be designed and arranged such that it lies within the inner volume defined by the second grid structure, or *vice versa.*

In accordance with the embodiment discussed so far, the first grid structure and the second grid structure can be configured and attached, e.g. to an attachment structure, such that they are repositionable relative to each other by repositioning the attachment structure.

The repositionable arrangement may be such that the mesh-width or opening angle of the grid with respect to transverse planes, in particular a transverse central plane of the collection container, can be set or adjusted to at least a maximal and a minimal mesh-width or opening angle by repositioning at least one of the first and second grid structure.

The mesh-width in particular may be the distance between directly adjacent grid elements in a direction perpendicular to the normal direction of the envelope as regards a certain transverse plane, in particular transverse central plane, of the collection container.

The opening angle may be understood as an angle spanned between two directly adjacent grid elements and a center axis or pivot axis of the collection container as regards a certain transverse plane, in particular transverse central plane, of the collection container.

The mesh-width and/or opening angle in particular may be determined relative to a transverse central plane of the collection container, which transverse central plane may be used as a reference. However, also other transverse planes may be used as a reference.

It is noted, that the mesh-width may also be understood as the surface area of a segment of the collection container spanned between two directly adjacent grid elements of the resilient grid relative to the direction perpendicular to the normal direction of the envelope.

It shall be noted, that in embodiments, the arrangement may be such that at least one intermediate mesh-width or opening angle in between the maximal and minimal mesh-width or opening angle may be set.

The repositionable arrangement inter alia may comprise at least one of a translational and rotational movement of the first and second grid structure relative to each other.

The proposed collection container allows, by adjusting the mesh-width or opening angle by repositioning the first and second grid structure, to adjust the collecting properties for example to the size of objects to be collected. Thus, the scope of functionality of the collection container can at least be improved. The collection container is configured as a pivotable or rollable container, in particular cage, than can be rolled over the ground to thereby, i.e. in a pivoting roll-over action, collect objects, such as fruits, from the ground into the collection container.

The first grid structure and second grid structure are configured and attached to a hub or hub structure or hub component.

The configuration and/or attachment is such that repositioning, for example by a pivoting motion, of the at least one of the first and second grid structure comprises a rotational relative movement between the first and second grid structure. In particular in such embodiments, interlaced first and second grid structures may be provided.

The collection container comprises at least one axial hub. The axial hub is implemented for pivotably coupling or supporting the collection container to a corresponding or counterpart support or support structure, for example a counterpart hub.

The collection container comprises two hubs . The collection container may be implemented and designed as a rotatable or rollable cage or basket. Such a cage or basket may for example be implemented to be rolled over the ground to thereby pass objects through the resilient grid into the collection container.

According to the invention the hub comprises a first hub component that is associated with, for example mechanically coupled with, the first grid structure.

Further, the hub comprises a second hub component that is associated with, for example mechanically coupled with, the second grid structure.

It shall be noted, that the term associated as used herein may comprise mechanical attachment and/or coupling.

Attaching the first and second grid structure to respective hub components may result in a comparatively easy and straightforward mechanical design and advantageous operability to reposition the grid structures, for example in a pivoting movement.

According to the invention the first and second hub component are supported rotatable relative to each other. The freedom of rotation of the first and second hub component may be adjusted or set in accordance with or in dependence of the maximal and/or minimal mesh-width or opening angle.

The setting of the mesh-width or opening angle involves a pivoting movement of the first hub component relative to the second hub component, for example with respect to the hub axle of the hub, which hub axle may coincide with a longitudinal axis of the collection container.

Providing rotational setting possibilities by using hubs and hub components, such as hub-rings, may for example be advantageous with collection containers comprising interlaced grid structures, such for example ellipsoid or cylinder shaped first and second grid structures where one of the grid structure at least in part is arranged within the other one.

In embodiments, the first and second hub components may be implemented as coaxial first and second hub rings. The first and second hub rings may be pivotably coupled to each other along a circumferential coupling interface.

The coupling interface may for example comprise meshing or interlocked slide elements establishing a type of slide bearing between the first and second hub rings.

Using or implementing respective hub rings may for example be advantageous as regards light-weight construction, but also advantageous in view of operability related to repositioning the first and second grid structure for setting the mesh-width or opening angle.

In embodiments in which the first and second hub elements, or in more general term the hub as such, are/is implemented in a ring-shape configuration, a central hole or passage of the hub may be implemented, for example adapted in size and/or inner diameter, such that objects to be collected can be passed through into and/or out of the collection container. The opening may thus be implemented and used as a discharge opening and/or opening for collecting objects.

The collection container, specifically for example the hub or one of the hub sections, may comprise an adjustment assembly or component part which is configured to adjust the size, such as the inner diameter of the hub, specifically the central hole or passage, to the actual mesh-width or opening angle respectively defined by the first and second grid. The adjustment assembly may for example comprise a shutter or other means suitable for restricting the inner diameter of the central hole or passage.

In variants, the adjustment assembly may be implemented in such a way, for example by suitable coupling elements, that the inner diameter is automatically adjusted in concert with a repositioning action setting a certain mesh-width or opening angle, for example the maximal or minimal mesh-width or opening angle.

The first hub component or the second hub component may comprise at least one axial through-hole guiding through a grid section of the second or first grid structure associated with the second or first hub component. This in particular may mean that one of the hub components comprises an axial through hole for passing through, surrounding or guiding trough, a grid section of the grid structure associated with the respective other hub component.

For example, in case that the first and second grid structure at least in part are implemented in an interlaced configuration, for example in case that a part of the first grid structure is located within the inner volume of the second grid structure or *vice versa,* inner grid elements, such as elongated wiry bars, may be associated with an outer hub component, i.e. a hub component facing away from the inner volume of the collection container, i.e. located axially outwards. The grid elements associated with the outer hub component then may pass through the axial through-holes of the other, inner hub component, i.e. the hub component facing towards the inner volume of the collection container, i.e. located axially inwards. By this, the stability of the interlaced grid structures at least in part may be enhanced, and beyond this a comparatively easy and compact design may be obtained.

The axial through-holes may for example be provided along a circumferential line of the hub, i.e. of a respective hub component. Further, the through-holes may be implemented as slotted holes in circumferential direction. At least one through-hole may be adapted such that at least one circumferential end thereof provides an abutment, specifically a pivot stop, for the grid element passing therethrough. The abutment, e.g. the pivot stop, may correspond to the maximal or minimal mesh-width or opening angle, meaning that in case of abutment, the maximal or minimal mesh-width or opening angle is set. In embodiments, both ends of the through-hole may function as abutments, e.g. pivot stops, respectively associated with the maximal and minimal mesh-width or opening angle. Respective ends may comprise latching means for latching a respective grid element. Such latching means may for example comprise a narrowing or constriction in the lateral width of a corresponding through-hole.

In embodiments, the collection container may comprise at least one setting mechanism associated with at least one of the first grid structure and second grid structure. The setting mechanism may be configured and be operable to allow manual repositioning of at least one of the first and second grid structure for setting the mesh-width or opening angle.

As an example, the setting mechanism may be designed such that it allows pivoting the first hub component against and relative to the other, i.e. second hub component, to thereby adjust the mesh-width or opening angle.

In embodiments in which a setting mechanism is present allowing setting of the mesh-width or opening angle, the setting mechanism may be implemented or comprise at least one of a locking flap and handling flap for locking and/or setting the mesh-width or opening angle of the first and second grid structure.

The at least one of a locking flap and handling flap may in embodiments be implemented as a radial protrusion on or at one of the first and second hub component or ring, wherein the radial direction may be related to a pivot axis of the collecting container and/or related to a hub-axis of the hub of the collecting container.

Providing a setting mechanism may ease handling and safeguard stable operation during collecting activities.

In embodiments, the first and second grid structure may comprise a given or pre-defined number of resilient wiry bars, i.e. wire-shaped bars, wherein in specific embodiments the first and second grid structure may be composed of a given number of resilient wiry bars.

The wiry bars may be curved and elongated, and aligned essentially parallel with a pivot axis or longitudinal axis of the collection container, in particular the hub axis. The curvature of the wiry bars may be such that the collection container has a convex shape in the form of a rotational ellipsoid.

In embodiments, in which the first and second grid structure comprise or are composed of wiry bars, e.g. as described beforehand, the number of wiry bars of the first grid structure may be equal to the number of wiry bars of the second grid structure.

As already indicated, wiry bars of the first and second grid structure may be arranged and attached to extend and be aligned in lengthwise direction in essentially parallel to an axial direction, in particular a symmetry axis, pivot axis and/or the hub axis, of the collection container. Regarding the first and second grid structure, respective grid elements may be evenly distributed along the envelope.

The aforementioned arrangements in particular are suitable for collecting objects, such as fruits, from a surface, e.g. the ground, in a rolling over motion, meaning that objects may easily be collected by rolling the collection container over the object, i.e. fruit, lying on the surface or ground. Further, the mesh-width may be adapted to the objects to enhance collecting efficiency.

In embodiments, each resilient wiry bar of the first or second grid structure may pass through one of the through-holes, described and discussed further above, provided in the second or first hub component.

For example, the wiry bars of the first grid structure may define an inner cage essentially located within an inner volume of an outer cage defined by the second grid structure. The first and second grid structure, i.e. the inner and outer cage, in this case may be considered as interlaced grids or cages. The wiry bars defining the inner cage may be associated with an outer hub component of the hub, and the wiry bars defining the outer cage may be associated with an inner hub of the collection container. In particular in such a configuration, the wiry bars of the first grid structure may pass through or be guided through the through-holes provided along a circumferential line of the second hub component. Such a design may provide mechanically comparative stable and reliable operation.

In embodiments it may be provided that the first grid structure defines a first envelope layer, and the second grid structure defines a second envelope layer.

At least a section of the first envelope layer may be located directly adjacent to or spaced apart from the second envelope layer. In such configurations, the wiry bars of one of the grid structures may for example be located spatially within the volume encircled by the envelope defined by the wiry bars of the other grid structure, in particular meaning that an envelope defined by the inner wiry bars is located completely within the inner volume encircled by an envelope of the outer wiry bars.

In particular, in case that the collection container is pivotable around a pivot axis, the wire or wiry bars may be aligned in lengthwise direction in accordance with the pivot axis, and may, in crosswise or circumferential direction, be equally distributed over the envelope. In other words, the wiry bars may be equally distributed over the envelope in a direction perpendicular to the envelope normal. In such configurations, for example, the wiry bars of one of the grid structures may be located, with respect to the radial direction relative to the pivot axis, at a lower level than the wiry bars of the other grid structure, the wiry bars at the lower level defining an inner cage and the wiry bars at the upper level defining an outer cage. For example, the wiry bars of one of the grid structures may be arranged in series with the wiry bars of the other grid structure relative to the normal direction of the envelope.

In embodiments in which, the first grid structure may define a first envelope layer, and the second grid structure may define a second envelope layer, it may be provided that at least a section of the first envelope layer coincides with a section of the second envelope layer. In such configurations, the wiry bars of the first and second grid structure may be located at the same level relative to the pivot axis or a central axis of the collection container, or relative to the normal direction of the envelope. In particular, the wiry bars of the first and second grid structure may in such configurations be located within a common envelope layer.

In embodiments in which wiry bars are located in different envelope layers, the maximal mesh-width or opening angle may be obtained by repositioning the grid structures, for example by a rotational movement relative to each other, such that the grid structures are aligned behind each other in normal direction of the envelope. For example, the grids in such configuration may be superposed such that a maximal distance between any of directly adjacent wiry bars or grid elements in transverse to the envelope normal is obtained.

In embodiments in which wiry bars are located in the same envelope layer, i.e. in which wiry bars, or more general grid elements, of the first and second grid structure are located at the same level relative to the normal of the envelope, the maximal mesh-width or opening angle may be obtained by repositioning the grid structures such that wiry bars of the first and second grid structure abut against each other in a direction perpendicular or transverse to the normal direction of the envelope, such that a distance between all non-abutting wiry bars is maximal.

In the above embodiments, in order to obtain the minimal mesh-width or opening angle, the first and second grid structure may be repositioned, in particular pivoted, such that grid elements, in particular wiry bars, of the first grid structure are offset, preferably equally offset, from grid elements, in particular wiry bars, of the second grid structure in a direction perpendicular to or transversal to the normal of the envelope.

In particular in such configurations, wiry bars of the first and second grid structures may be positioned alternatingly as regards the direction perpendicular or transversal to the normal of the envelope, wherein mutual distances between adjacent wiry bars of the first and second grid structure in the direction perpendicular to the normal of the envelope, may be equal for all wiry bar pairs selected from the first and second grid structure.

In order to obtain the minimal mesh-width or opening angle, the grid elements or wiry bars of the first and second grid structure may for example be arranged in a staggered configuration, in which in each gap between directly adjacent wiry bars of the first grid structure, a wiry bar of the second grid structure is located, and *vice versa.*

In embodiments, it may be provided that grid elements, such for example the wiry bars, are evenly distributed along the envelope, and that a distance between directly adjacent grid elements and/or an opening angle between directly adjacent grid elements of the first grid structure is/are essentially equal to the corresponding distance and/or opening angle of the grid elements of the second grid structure, or *voce versa.*

For example, as regards a pivotable, rotationally symmetric collection container, in which the first and second grid structures are associated with a first and second hub component, as described in detail further above, the aforementioned configurations may allow, starting from the maximal mesh-width or opening angle, to set the minimal mesh-width or opening angle by pivoting the first grid structure relative to the second grid structure by half the mesh-size or opening angle of the first and second grid structure. Thereby, the grid elements in circumferential direction may be distributed evenly over the envelope.

Similarly, starting from the minimal mesh-width or opening angle, the maximal mesh-width or opening angle may be obtained by pivoting the first grid structure relative to the second grid structure by half the mesh-size or opening angle of the first and second grid structure to thereby superimpose or contiguously position the grid elements of the first and second grid structure.

In embodiments, at least in part already indicated above, the maximal mesh-width or opening angle may correspond to a configuration in which the first and second grid structure are aligned with each other, and the minimal mesh-width or opening angle may correspond to a configuration in which the first and second grid structure are offset from each other by half the mesh size of the first and second grid structure. Such a configuration may be advantageous for allowing easy adjustment of the mesh-width or opening angle.

In embodiments, the collection container may comprise an abutment, locking and/or guiding structure, which is configured for:
- abutting the first and/or second grid structure in a first position corresponding to the maximal mesh-width or opening angle, and/or
- abutting the first and/or second grid structure in a second position corresponding to the minimal mesh-width or opening angle, and/or
- locking the first and/or second grid structure in the first and/or second position, and/or
- guiding the first and/or second grid structure in movements between the first and second position.

Such an abutment, locking and/or guiding structure may for example be implemented in or in connection with through-holes provided in a hub component as described further above, and/or may be provided in, at, or in connection with a locking and/or handling flap also discussed in detail further above.

Locking the grid structures may comprise locking at least one grid element of a corresponding grid structure, or engaging locking elements in positions corresponding to the maximal or minimal mesh-width or opening angle. By such an abutment, locking and/or guiding structure, ease of handling and operability may be greatly enhanced.

In embodiments, the collection container may be implemented with two hubs provided on two axial ends of the collecting container and aligned with respect to their hub axles. A common hub axle of the two hubs may define a pivot axis around which the collection container may be pivoted during operation in rolling-over collecting modes. The two hubs may be implemented essentially symmetrically, and may be implemented according to any embodiment and variant described herein. One of the hubs may, as discussed further above, comprise a central through-hole implemented to be used as a discharge or collection opening for the collecting container.

The hub or hubs may comprise at outer axial sides coupling interfaces, such as sliding surfaces, configured for being coupled with an axle or stub axle section of a retaining element or unit. The retaining element or unit may for example be implemented as a type or clamp or bracket configured to be coupled to the coupling interfaces to thereby pivotably retain the collection container.

In embodiments related to the collecting device, the collection device can comprise a retaining unit, for example designed as a bracket or designed in a configuration described above. The retaining unit may be configured to fixedly or pivotably support a collection container in accordance with any embodiment and variant as describe herein.

The collecting device may in embodiments in addition comprise an elongated handle for manual operation, in particular for collecting objects, such as fruits, in a rolling over motion, i.e. by manually rolling the collection container over the ground to thereby pass the objects through the resilient grid into the collection container.

In embodiments, the retaining unit, or alternatively one of the hubs, may comprise a spout implemented as a collection or discharge aid for collecting or discharging objects via a central opening provided in the hub or one of the hubs.

In embodiments, the collection container may be specifically adapted in size and/or configuration to respective objects, or range of objects, such as a certain size range, intended to be collected. For example, diameter, axial length, inner volume and other characteristics of the collection container and related elements, may be adapted to respective needs or demands.

In embodiments, a modifying unit may be provided, which is adapted to alter the resilience of the first and/or second grid structure. This may be advantageous for specific adaptation to different sizes and/or weights and/or surface characteristics of the type of object, e.g. fruit, to be collected.

In embodiments, the collection container may have a rotationally symmetric overall shape. For example, the collection container may have an ellipsoidal shape, preferably in the shape of a truncated ellipsoid. In embodiments, in which the collection container comprises a rotationally symmetric overall shape, the resilient grid may extend, for example as a wrap-around-type envelope, in circumferential direction with respect to the axis of rotation of the collection container. In such embodiments, it may for example be provided that the resilient structure extends between and is provided between a pair of axial hubs mutually spaced in axial direction of the collection container.

In embodiments such as mentioned and described beforehand but also in other embodiments, the collection container may be operated by rolling it over the ground to thereby urge the resilient grid against the objects to be collected, which in turn may cause, by interaction of the objects with the resilient grid, the resilient grid or resilient grid elements, such as wiry bars, to bend or spread apart to thereby generate a penetration or collection opening suitable for passing through the object. After having passed through and of no further obstacles prevail, the object is enclosed within the container in tat the penetration opening closes again by resilient restoring forces of the resilient structure.

A collection device, assembly and container according to any embodiment as described herein may be configured to be manually operated. However, it may in embodiments also be possible to provide an automatic or semi-automatic implementation.

According to an aspect of the disclosure an object collection system or kit may be provided that comprises at least one collection container according to at least one embodiment as described herein. The system or kit may be adapted such that different types, sizes or shapes of collection containers, for example differing in overall size, shape, strength and/or mesh-widths or opening angles, may be used, for example, with a single or a predefined number retaining bracket(s). Such a kit may in embodiments comprise a number of collection tools having pivotable collection containers configured to be coupled with a respective, for example universal, handle. In any embodiment described herein, the collecting container according to further embodiments, may comprise an oblong or prolong structure, i.e. it may have a structure in which a dimension in axial direction, in particular parallel to or coinciding with the pivot axis, is larger than a dimension in transverse, radial direction, or it may have a structure in which the dimension in axial direction is smaller than the dimension in transversal, in particular radial, direction. The specific overall structure may be selected in accordance with characteristics of objects intended to be collected.

In embodiments, the bracket and/or hub(s) and/or resilient grid, e.g. the grid structures, may be manufactured from a polymeric material, reinforced polymeric material, from metal, in particular light metals or metal alloys, or polymeric-metal composites.

In embodiments in which a spout is provided, the spout may be implemented to be operated as a modifying mechanism, configured to modify the opening width or discharge diameter of the central passage of the hub in accordance to the actual mesh-width or opening angle. Adaptation of the opening width of the passage may in embodiments be coupled with adjusting the mesh-width or opening angle, such that opening width and mesh-width or opening angle may be set simultaneously.

In embodiments, in which the resilient structure comprises resilient wiry bars, the wiry bars may be implemented to have a diameter in the range between 1.0mm to 1.5mm, or 1.1mm to 1.4mm, or 1.25mm to 1.3mm. Such diameters have turned out to have sufficient bendability and at the same time sufficient flexibility to allow collecting of for example fruit objects without significantly injuring the skin of the collected fruits.

In embodiments in which a retaining bracket is provided, the retaining bracket may be embodied to comprise a first and second arm extending from a common base section and implemented to support axial end sections, such as stub axle sections, of the collection container.

Below, exemplary embodiments of the invention will be described in connection with the annexed figures, in which
- FIG. 1: shows a perspective view of a collection container assembly with a collection container being in a first operational mode;
- FIG. 2: shows a detailed view of the collection container in the first operational mode;
- FIG. 3: shows a perspective view of the collection container assembly with the collection container being in a second operational mode;
- FIG. 4: shows a detailed view of the collection container in the second operational mode; and
- FIG. 5: shows a perspective view of a collecting device comprising a collection container according to FIG. 1.

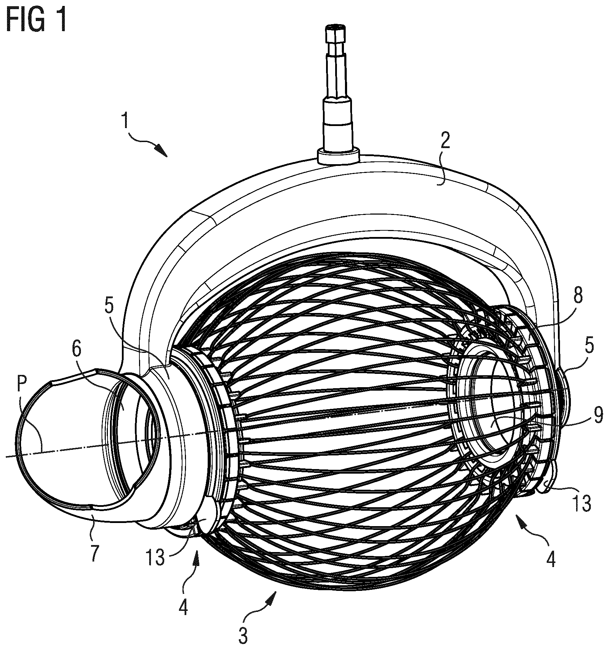

FIG. 1 shows a perspective view of a collection container assembly 1 comprising a collection container 3 and a bracket 2 which is configured to pivotably retain the collection container 3.

The collection container assembly 1 is configured for the collection of fruits, such as apples and the like, or nuts or similar, but may allow also the collection of other objects.

The collection container 3 of the embodiment related to the figures, is implemented as a rotationally symmetric, truncated ellipsoid-shaped cage or basket.

The collection container 3 is pivotably supported by the bracket 2 to be pivotable around a pivot axis P and thus can be rolled over the ground to pick up fruits, or other objects, which will be explained in more details further below.

The collection container 3 comprises a resilient grid extending between two axial hubs 4. Each axial hub 4 being pivotably coupled to a counterpart hub 5 of the bracket 2.

One of the counterpart hubs 5, located on the right-hand side in FIG. 1, is implemented in a closed configuration, meaning that the collection container 3 is closed at the respective counterpart hub 5.

The other counterpart hub 5, located on the left-hand side in FIG. 1, is in a non-closed configuration, and comprises a central opening 6 evolving in axial direction into an axial spout 7. The spout 7 may be used for discharging and/or picking up fruits or objects from or into the collection container 3.

In order to be used as a discharging and/or picking facility, the spout 7 and central opening 6 may communicate with the inner volume of the collection container 3 such that a passageway is formed, suitable for passing through objects to be collected.

Here it shall be noted, that the spout is only optional, and it may in embodiments be provided that both counterpart hubs 5 are of closed configuration.

In order to be able to transfer objects into and out of the collecting container 3 by using the spout 7, at least the hub 4 associated with the counterpart hub 5 having the spout 7 may be provided with a central through-hole, which in the assembled state is aligned with the central opening 6. In the embodiment shown in connection with the figures, both axial hubs 4 are implemented with a central through-hole, which exemplarily can be seen for example in FIG. 1 at the axial hub 4 averted from the spout 7.

In the embodiment shown in the figures, the collection container 3 is embodied to be rotationally symmetric relative to the pivot axis P, wherein also the axial hubs 4 are implemented in a symmetric design, meaning that both axial hubs 4 have the same design and configuration.

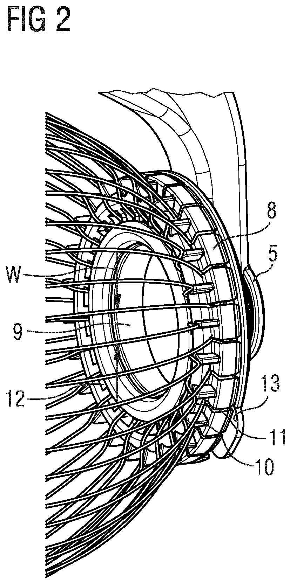

Each axial hub 4 comprises a first hub component 8 and a second hub component 9, which can be seen in more detail in FIG. 2 showing a detailed view of the collection container 3 in the first operational mode.

As can in particular be seen from FIG. 1 and FIG. 2, the collection container 3 comprises grid defining an envelope of the collection container 3. The grid comprising resilient first wiry bars 10 or and resilient second wiry bars 11. The resilience of the wiry bars 10, 11, and for example their attachment, is such that adjacent wiry bars can be bent apart from each other in circumferential direction to generate a penetration opening for penetrating therethrough an object to be collected.

Collecting an object lying on the ground or on a surface thus may be conducted in that the collection container 3 is rolled over the object, wherein in case that the collection container 3, specifically the grid, is forced against the object, the resilient grid is locally deformed, generating the penetration opening by locally enlarging the mesh-width W, i.e. local distance between adjacent wiry bars 10 and 11, of the resilient grid with regard to the idle configuration of the grid.

The object can then be passed into the collection container 3 through the penetration opening thus generated. After having passed the penetration opening, the idle mesh-width W, corresponding to a certain opening angle, may be recovered again by resilient forces of the resilient wiry bars 10, 11.

Coming now to FIG. 2, it can be inferred that the fist wiry bars 10 are associated and attached to the first hub component 8, and that the second wiry bars 11 are associated and attached to the second hub component 9. The wiry bars 10, 11 may for example be attached to the first and second hub component 8, 9 by merging them into slots or attachment recesses fixedly connecting the bars to the respective hub component, and providing sufficient support in circumferential direction such that forces acting on the wiry bars in circumferential direction may lead to resiliently bending or twisting a respective bar in circumferential direction.

The group of first wiry bars 10 can be considered a first grid structure that is associated with the first hub component 8. The group of second wiry bars 11 can be considered a second grid structure associated with the second hub component 9.

Turning now to the axial hubs 4, it has already been stated that each axial hub 4 comprises at least the first and second hub components 8 and 9. The first and second hub components 8 and 9 are attached to each other to be rotatable relative to each other as regards the pivot axis P.

From FIG. 2 it can be further inferred, that the second hub component 9 is located on an axially outer side of the hub 4, whereas the first hub component 8 is located on an axially inner side of the hub 4 facing toward the grid.

Further, each second wiry bar 11 is guided through an axial through-hole 12 provided along a circumferential line of the first hub component 8.

The through-holes 12 may be implemented as slotted holes relative to the circumferential direction, wherein ends of the slotted holes 12 in circumferential direction may act as abutment faces for respective second wiry bars 9 guided therethrough.

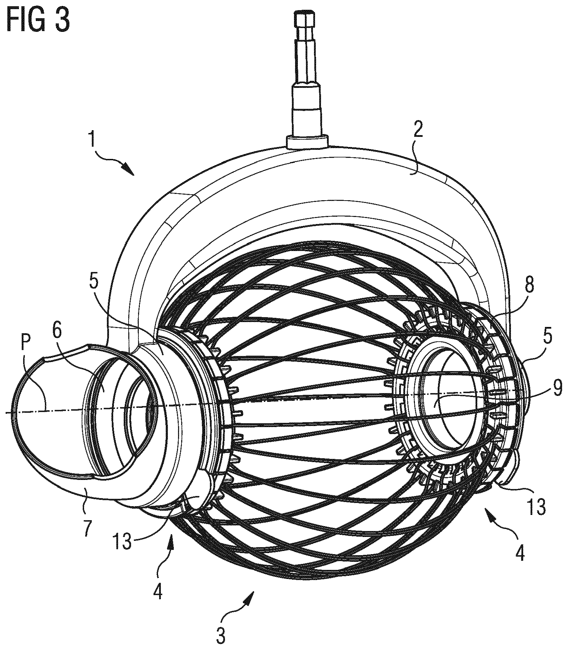

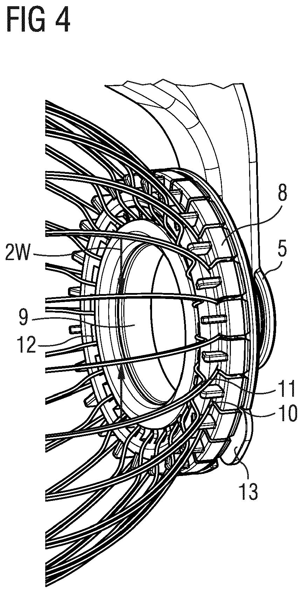

Coming now to FIG. 3 showing a perspective view of the collection container assembly being in a second operational mode, and to FIG. 4 showing a detailed view of the collection container in the second operational mode, the operation of the grid, in particular first and second grid structure will be explained in more detail. It shall be noted, that in FIG. 3 and FIG. 4 like elements are designated with like reference signs.

In the first operational mode, the wiry bars 10 and 11 of the first and second grid structures are positioned such that the first and second wiry bars 10 and 11 relative to the circumferential direction are provided in an alternating arrangement, meaning that in between two directly adjacent first wiry bars 10 there is provided, approximately in the center between them, a second wiry bar 11, and *vice versa.*

In such a configuration, a minimal mesh-width W, that is constant over the whole circumference of the collection container 3 in transversal planes of the collection container, is obtained. Or in other words, a minimal opening angle between each pair of directly adjacent wiry bars 10 and 11 is obtained. It shall be noted, that for determining the mesh-width and/or opening angle, a transverse central plane of the collection container 3 may be used as a reference.

Regarding the second operational mode as shown in FIG. 3 and FIG. 4, the first and second hub components 8 and 9 are pivoted relative to each other, such that the position of the first wiry bars 10 of the first grid structure coincides with the position of the second wiry bars 11 of the second grid structure. In other words, by pivoting the first and second hub components 8 and 9 against each other, which, due to the attachment of the grid structures to the hub components, causes the first and second grid structures, i.e. first wiry bars 10 and second wiry bars 11, to pivot accordingly, the first and second grid structures may be congruently positioned such that the grid structures overlie each other.

Thus, the second operational mode differs from the first operational mode, in that the mesh-width relative to a transversal central plane of the collection container 3 is enlarged and amounts 2xW.

As can be inferred from the figures, the mesh-width in the second operational mode is twice as large as the mesh-width in the first operational mode. This in particular is due to the fact that the opening angles between directly adjacent first wiry bars 10 of the first grid structure and those of the second wiry bars 11 of the second grid structure are identic, and that the first and second wiry bars 10, 11 are evenly distributed over the circumference of the first hub component 8 and the second hub component 9.

Hence, it can be seen, that by rotating, i.e. repositioning the first and second hub components 8 and 9, and therewith the first and second wiry bars 10 and 11 against each other, the mesh-width relative for example to a transverse central plane can be adjusted to a minimal (W) and maximal mesh-width (2W) corresponding to the first and second operational modes.

The first operational mode where the minimal mesh-width W is implemented can be used for the collection of smaller objects as compared to the second operational mode having a larger mesh-width (2W) .

As can be seen, by providing the first and second grid structures and enabling to reposition the first and second grid structure to adopt a staggered or overlayed alignment, the scope of application of the collection container may be enhanced.

In order to improve operability in connection with repositioning the first and second grid structure relative to each other, the first and/or second hub component 8 and 9 may comprise a flap 13 or lever.

In the embodiment shown in the figures, a respective flap 13 may be provided with the second hub component 9. In more detail, the flap 13 may be implemented integrally with the second hub component 9 and project in radial direction to protrude over the radially outer edge of the first hub component 8.

The flap 13 may be used to pivot the second hub component 9 relative to the first hub component 8, while securing the first hub component 8 against pivoting, for example by gripping the first hub component 8 with the hand.

The flap 13 may further be implemented to function as a locking device, adapted to establish an engagement between the first hub component 8 and the second hub component 9 in the first and second operational modes. Thus, the position of the first and second grid structures may be secured in the first and second operational mode against unintentional pivoting movements.

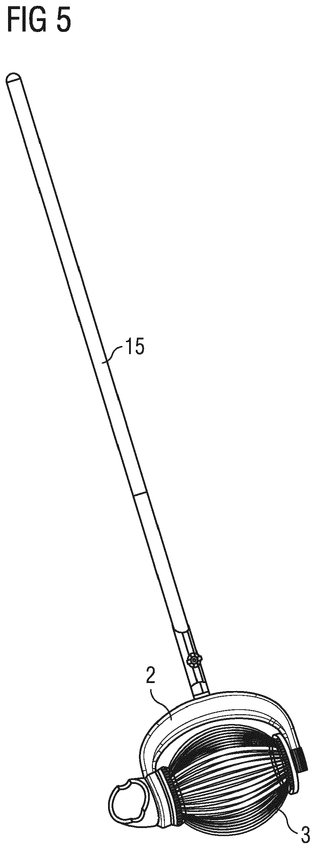

FIG. 5 shows a collecting device comprising a collection container 3 as described in connection with FIG. 1 to FIG. 4. Specifically, the collection container 3 is attached to an elongated handle 15 by means of the bracket 2. The handle 15 and bracket 2 may comprise corresponding quick-release fasteners for attaching the collection container 3 to the handle 15.

The collection device 14 may be operated in a manual fashion by the handle 15 in that the collection container 3, more specifically the resilient grid, is rolled on the ground. If an object, e.g. apple or the like, is present, and the collection container 3 is rolled over the object, it is passed into the collection container 3 as described further above.

By setting the collection container 3 to adopt either the first or second operational mode, the user can, at least to some extent, adjust the collecting characteristics of the collection container 3 to the characteristics of the object to be collected. In particular, the user may adapt, by switching between the operational modes, the collecting device 14 to the collection of smaller objects, corresponding to the first operational mode, and larger objects, corresponding to the second operational mode.

Further in view of FIG. 5, the bracket 2 may be of a C-shaped configuration having a base section and a pair of retaining arms projecting therefrom. The bracket 2 may be in the form and configuration of a wheel fork adapted to pivotably retain the collection container 3.

The retaining arms may comprise at their free ends bearing shells respectively designed and configured to accommodate and retain corresponding stub axle sections of the collection container 3, such that the collection container 3 is able to be rotated around the pivot axis P.

In all, it can be seen that the flexibility of use of the collection container and collecting device as presented herein can be enhanced as compared to known solutions.

### List of reference numerals

- 1: collection container assembly
- 2: bracket
- 3: collection container
- 4: axial hub
- 5: counterpart hub
- 6: central opening
- 7: spout
- 8: first hub component
- 9: second hub component
- 10: first wiry bar
- 11: second wiry bar
- 12: axial through hole
- 13: flap
- 14: collecting device
- 15: handle

- P: pivot axis
- W: mesh-width

## Claims

1. Collection container (3) arranged for collecting an object of a certain constitution from the ground by passing the object through a resilient grid (10, 11) defining a section of the collection container envelope and operable to be forced against the object to thereby, locally change a pre-set mesh-width (W) or opening angle of the grid (10, 11) by local resilient grid deformation generating a penetration passage for penetrating therethrough the object into the collection container (3),
wherein the grid (10, 11) comprising a first grid structure (10) and a second grid structure (11), the first and second grid structure (10, 11) being configured and attached to be repositionable relative to each other such that the mesh-width (W) can be set to at least a maximal (2W) and minimal mesh-width (W) or opening angle by repositioning at least one of the first (10) and second grid structure (11),
**characterized in that**,
the collection container (3) comprising at least one axial hub (4) for pivotably coupling the collection container (3) to a support (2), wherein the hub (4) comprises a first hub component (8) associated with the first grid structure (10), and a second hub component (9) associated with the second grid structure (11), and
wherein the first (8) and second hub component (9) being supported rotatable relative to each other such that setting the mesh-width (W) or opening angle involves pivoting movement of the first hub component (8) relative to the second hub component (9).

2. Collection container (3) according to claim 1, the first grid structure (10) and second grid structure (11) are configured and attached such that repositioning of the at least one of the first (10) and second grid structure (11) comprises a rotational relative movement between the first (10) and second grid structure (11).

3. Collection container (3) according to claim 1, the first (8) and second hub components (9) being implemented as coaxial first (8) and second hub rings (9) pivotably coupled to each other along a circumferential coupling interface.

4. Collection container (3) according to claim 3, the first (8) or second hub component (9) comprising at least one axial through-hole (12) guiding through a grid section of the second (11) or first grid structure (10) associated with the second (9) or first hub component (8).

5. Collection container (3) according to at least one of claims 1 to 4, comprising at least one setting mechanism (13) associated with at least one of the first grid structure (10) and second grid structure (11), and operable to manually reposition at least one of the first (10) and second grid structure (11) for setting the mesh-width (W) or opening angle.

6. Collection container (3) according to claim 5, the setting mechanism (13) comprising at least one of a locking flap (13) and handling flap (13) for locking and/or setting the mesh-width or opening angle of the first (10) and second grid structure (11).

7. Collection container (3) according to claim 6, the at least one of a locking flap (13) and handling flap (13) being implemented as a radial protrusion on or at one of the first (8) and second hub ring (9).

8. Collection container (3) according to at least one of claims 1 to 7, the first (10) and second grid structure (11) comprising at least one of a defined and equal number of resilient wiry bars (10, 11) preferably extending and aligned in lengthwise direction essentially parallel to an axial direction of the collection container (3).

9. Collection container (3) according to claim 4 and 8, each resilient wiry bar of the first (10) or second grid structure (11) passing through one of the through-holes (12) provided in the second (9) or first hub component (8).

10. Collection container (3) according to at least one of claims 1 to 9, the first grid structure (10) defining a first envelope layer, and the second grid structure defining a second envelope layer, wherein at least a section of the first envelope layer is located directly adjacent to or spaced apart from the second envelope layer, and/or at least a section of the first envelope layer coincides with a corresponding section of the second envelope layer.

11. Collection container (3) according to at least one of claims 1 to 10, the maximal mesh-width (2W) or opening angle corresponding to a configuration in which the first (10) and second grid structure (11) are aligned with each other, and the minimal mesh-width (W) or opening angle corresponding to a configuration in which the first (10) and second grid structure (11) are offset from each other by half the mesh size (2W) of the first (10) and second grid structure (11).

12. Collection container (3) according to at least one of claims 1 to 8, comprising an abutment, locking and/or guiding structure (12, 13) configured for:
- abutting the first (10) and/or second grid structure (11) in a first position corresponding to the maximal mesh-width (2W), or opening angle and/or
- abutting the first (10) and/or second grid structure (11) in a second position corresponding to the minimal mesh-width (W) or opening angle, and/or
- locking the first (10) and/or second grid structure (11) in the first and/or second position, and/or
- guiding the first (10) and/or second grid structure (11) in movements between the first and second position.

13. Collecting device (14) for collecting objects, such as fruits, from the ground, comprising a retaining unit (15, 2) fixedly supporting or pivotably supporting a collecting container (3) according to at least one claims 1 to 12.

## Patentansprüche

1. Sammelbehälter (3), der zum Sammeln eines Gegenstands (26) einer bestimmten Beschaffenheit vom Boden ausgelegt ist, indem der Gegenstand (26) durch ein elastisches Gitter (10, 11) geführt wird, das einen Abschnitt der Sammelbehälterumhüllung bildet und gegen das Objekt gedrückt werden kann, um dadurch eine voreingestellte Maschenweite (W) oder einen Öffnungswinkel des Gitters (10, 11) durch lokale elastische Gitterverformung lokal zu ändern, wodurch eine Durchgangspassage zum Durchgang des Objekts durch dieses in den Sammelbehälter (3) gebildet wird,
wobei das Gitter (10, 11) eine erste Gitterstruktur (10) und eine zweite Gitterstruktur (11) umfasst, die erste und zweite Gitterstruktur (10, 11) konfiguriert und befestigt sind, um relativ zueinander repositionierbar zu sein, so dass die Maschenweite (W) auf mindestens eine maximale (2W) und minimale Maschenweite (W) oder einen Öffnungswinkel durch Neupositionieren von mindestens einer ersten (10) und zweiten Gitterstruktur (11) eingestellt werden kann,
**dadurch gekennzeichnet, dass**,
der Sammelbehälter (3) mindestens eine axiale Nabe (4) zum schwenkbaren Kuppeln des Sammelbehälters (3) mit einem Träger (2) umfasst, wobei die Nabe (4) eine erste Nabenkomponente (8) umfasst, die der ersten Gitterstruktur (10) zugeordnet ist, und eine zweite Nabenkomponente (9), die der zweiten Gitterstruktur (11) zugeordnet ist, und
wobei die erste (8) und zweite Nabenkomponente (9) drehbar gegeneinander gelagert sind, so dass das Einstellen der Maschenweite (W) oder des Öffnungswinkels eine Schwenkbewegung der ersten Nabenkomponente (8) gegenüber der zweiten Nabenkomponente (9) umfasst.

2. Sammelbehälter (3) nach Anspruch 1, wobei die erste Gitterstruktur (10) und die zweite Gitterstruktur (11) konfiguriert und befestigt sind, so dass die Neupositionierung der mindestens einen ersten (10) und zweiten Gitterstruktur (11) eine rotierende relative Bewegung zwischen der ersten (10) und zweiten Gitterstruktur (11) umfasst.

3. Sammelbehälter (3) nach Anspruch 1, wobei die ersten (8) und zweiten Nabenkomponenten (9) als koaxiale erste (8) und zweite Nabenringe (9) ausgeführt sind, die entlang einer umlaufenden Kupplungsschnittstelle schwenkbar miteinander gekoppelt sind.

4. Sammelbehälter (3) nach Anspruch 3, wobei die erste (8) oder zweite Nabenkomponente (9) mindestens eine axiale Durchgangsbohrung (12) umfasst, die durch einen Gitterabschnitt der zweiten (11) oder ersten Gitterstruktur (10) führt, die der zweiten (9) oder ersten Nabenkomponente (8) zugeordnet ist.

5. Sammelbehälter (3) nach mindestens einem der Ansprüche 1 bis 4, umfassend mindestens einen Einstellmechanismus (13), der mindestens einer ersten Gitterstruktur (10) und zweiter Gitterstruktur (11) zugeordnet ist und zum manuellen Neupositionieren von mindestens einer ersten (10) und zweiten Gitterstruktur (11) zum Einstellen der Maschenweite (W) oder des Öffnungswinkels dient.

6. Sammelbehälter (3) nach Anspruch 5, wobei der Einstellmechanismus (13) mindestens eine Verriegelungsklappe (13) und Handhabungsklappe (13) zum Verriegeln und/oder Einstellen der Maschenweite oder des Öffnungswinkels der ersten (10) und zweiten Gitterstruktur (11) umfasst.

7. Sammelbehälter (3) nach Anspruch 6, wobei die mindestens eine Verriegelungsklappe (13) und Handhabungsklappe (13) als radialer Vorsprung an oder auf einem der ersten (8) und zweiten Nabenringe (9) ausgebildet ist.

8. Sammelbehälter (3) nach mindestens einem der Ansprüche 1 bis 7, wobei die erste (10) und zweite Gitterstruktur (11) mindestens eine definierte und gleiche Anzahl von elastischen Drahtstäben (10, 11) umfasst, die sich vorzugsweise in Längsrichtung im Wesentlichen parallel zu einer axialen Richtung des Sammelbehälters (3) erstrecken und ausgerichtet sind.

9. Sammelbehälter (3) nach Anspruch 4 und 8, wobei jeder elastische Drahtstab der ersten (10) oder zweiten Gitterstruktur (11) durch eine der Durchgangsbohrungen (12) geführt wird, die in der zweiten (9) oder ersten Nabenkomponente (8) angeordnet sind.

10. Sammelbehälter (3) nach mindestens einem der Ansprüche 1 bis 9, wobei die erste Gitterstruktur (10) eine erste Hüllschicht definiert und die zweite Gitterstruktur eine zweite Hüllschicht definiert, wobei mindestens ein Abschnitt der ersten Hüllschicht direkt angrenzend an oder beabstandet von der zweiten Hüllschicht angeordnet ist und/oder mindestens ein Abschnitt der ersten Hüllschicht mit einem entsprechenden Abschnitt der zweiten Hüllschicht übereinstimmt.

11. Sammelbehälter (3) nach mindestens einem der Ansprüche 1 bis 10, wobei die maximale Maschenweite (2W) oder der Öffnungswinkel einer Konfiguration entspricht, in der die erste (10) und die zweite Gitterstruktur (11) zueinander ausgerichtet sind, und die minimale Maschenweite (W) oder der Öffnungswinkel einer Konfiguration entspricht, in der die erste (10) und zweite Gitterstruktur (11) um die Hälfte der Maschenweite (2W) der ersten (10) und zweiten Gitterstruktur (11) voneinander versetzt sind.

12. Sammelbehälter (3) nach mindestens einem der Ansprüche 1 bis 8, umfassend eine Widerlager-, Verriegelungs- und/oder Führungsstruktur (12, 13), ausgelegt für:
- Angrenzen der ersten (10) und/oder zweiten Gitterstruktur (11) in einer ersten Position entsprechend der maximalen Maschenweite (2W) oder dem Öffnungswinkel und/oder
- Angrenzen der ersten (10) und/oder zweiten Gitterstruktur (11) in einer zweiten Position, die der minimalen Maschenweite (W) oder dem minimalen Öffnungswinkel entspricht, und/oder
- Verriegeln der ersten (10) und/oder zweiten Gitterstruktur (11) in der ersten und/oder zweiten Position, und/oder
- Führen der ersten (10) und/oder zweiten Gitterstruktur (11) in Bewegungen zwischen der ersten und zweiten Position.

13. Sammelvorrichtung (14) zum Sammeln von Gegenständen vom Boden, wie beispielsweise Früchten, umfassend eine Rückhalteeinheit (15, 2), die einen Sammelbehälter (3) nach mindestens einem der Ansprüche 1 bis 12 fest oder schwenkbar trägt.

## Revendications

1. Récipient de collecte (3) agencé pour collecter un objet d'une certaine constitution depuis le sol en passant l'objet par une grille élastique (10, 11) définissant une section de l'enveloppe du récipient de collecte et exploitable pour être forcée contre l'objet pour ainsi changer localement une largeur de maille (W) ou un angle d'ouverture prédéfini de la grille (10, 11) par déformation locale de la grille élastique en générant un passage de pénétration pour la pénétration à travers elle de l'objet pour entrer dans le récipient de collecte (3),
dans lequel la grille (10, 11) comprenant une première structure de grille (10) et une seconde structure de grille (11), les première et seconde structures de grille (10, 11) étant configurées et attachées pour pouvoir être repositionnées l'une par rapport à l'autre de telle sorte que la largeur de maille (W) puisse être réglée à au moins une largeur de maille maximale (2W) et une largeur de maille minimale (W) ou un angle d'ouverture maximal ou minimal en repositionnant au moins une de la première (10) et de la seconde (11) structure de grille,
**caractérisé en ce que**,
le récipient de collecte (3) comprend au moins un moyeu axial (4) pour coupler avec faculté de pivotement le récipient de collecte (3) à un support (2), dans lequel le moyeu (4) comprend un premier composant de moyeu (8) associé à la première structure de grille (10), et un second composant de moyeu (9) associé à la seconde structure de grille (11), et
dans lequel les premier (8) et second (9), composants de moyeu sont supportés en rotation l'un par rapport à l'autre de telle sorte que le réglage de la largeur de maille (W) ou de l'angle d'ouverture implique un mouvement de pivotement du premier composant de moyeu (8) par rapport au second composant de moyeu (9).

2. Récipient de collecte (3) selon la revendication 1, la première structure de grille (10) et la seconde structure de grille (11) sont configurées et attachées de telle sorte qu'un repositionnement de l'au moins une des première (10) et seconde (11) structures de grille comprenne un mouvement relatif de rotation entre les première (10) et seconde (11) structures de grille.

3. Récipient de collecte (3) selon la revendication 1, les premier (8) et second (9) composants de moyeu étant mis en œuvre sous forme de premier (8) et second (9) anneaux de moyeu coaxiaux couplés avec faculté de pivotement l'un à l'autre le long d'une interface de couplage circonférentielle.

4. Récipient de collecte (3) selon la revendication 3, le premier (8) ou second (9) composant de moyeu comprenant au moins un trou débouchant axial (12) guidant à travers une section de grille de la seconde (11) ou première (10) structure de grille associée au second (9) ou premier (8) composant de moyeu.

5. Récipient de collecte (3) selon au moins une des revendications 1 à 4, comprenant au moins un mécanisme de réglage (13) associé à au moins une de la première structure de grille (10) et de la seconde structure de grille (11), et actionnable pour repositionner manuellement au moins une de la première (10) et de la seconde (11) structure de grille pour régler la largeur de maille (W) ou l'angle d'ouverture.

6. Récipient de collecte (3) selon la revendication 5, le mécanisme de réglage (13) comprenant au moins un d'un volet de verrouillage (13) et d'un volet de manutention (13) pour verrouiller et/ou régler la largeur de maille ou l'angle d'ouverture des première (10) et seconde (11) structures de grille.

7. Récipient de collecte (3) selon la revendication 6, l'au moins un d'un volet de verrouillage (13) et d'un volet de manutention (13) étant mis en œuvre sous forme de protubérance radiale sur ou au niveau d'un des premier (8) et second (9) anneaux de moyeu.

8. Récipient de collecte (3) selon au moins une des revendications 1 à 7, les première (10) et seconde (11) structures de grille comprenant au moins un d'un nombre défini et égal de barres fines élastiques (10, 11) de préférence s'étendant et étant alignées dans le sens longitudinal essentiellement parallèlement à un sens axial du récipient de collecte (3).

9. Récipient de collecte (3) selon la revendication 4 et 8, chaque barre fine élastique de la première (10) ou la seconde (11) structure de grille passant par un des trous débouchants (12) fournis dans le second (9) ou le premier (8) composant de moyeu.

10. Récipient de collecte (3) selon au moins une des revendications 1 à 9, la première structure de grille (10) définissant une première couche d'enveloppe, et la seconde structure de grille définissant une seconde couche d'enveloppe, dans lequel au moins une section de la première couche d'enveloppe est située directement adjacente ou séparément de la seconde couche d'enveloppe, et/ou au moins une section de la première couche d'enveloppe coïncide avec une section correspondante de la seconde couche d'enveloppe.

11. Récipient de collecte (3) selon au moins une des revendications 1 à 10, la largeur de maille maximale (2W) ou l'angle d'ouverture maximal correspondant à une configuration dans laquelle les première (10) et seconde (11) structures de grille sont alignées l'une avec l'autre, et la largeur de maille minimale (W) ou l'angle d'ouverture minimal correspondant à une configuration dans laquelle les première (10) et seconde (11) structures de grille sont décalées l'une de l'autre par la moitié de la taille de maille (2W) des première (10) et seconde (11) structures de grille.

12. Récipient de collecte (3) selon au moins une des revendications 1 à 8, comprenant une structure de butée, de verrouillage et/ou de guidage (12, 13) configurée pour :
- buter contre la première (10) et/ou la seconde (11) structure de grille dans une première position correspondant à la largeur de maille maximale (2W), ou l'angle d'ouverture maximal et/ou
- buter contre la première (10) et/ou la seconde (11) structure de grille dans une seconde position correspondant à la largeur de maille minimale (W) ou l'angle d'ouverture minimal, et/ou
- verrouiller la première (10) et/ou la seconde (11) structure de grille à la première et/ou seconde position, et/ou
- guider la première (10) et/ou la seconde (11) structure de grille lors de mouvements entre les première et seconde positions.

13. Dispositif de collecte (14) destiné à collecter des objets, tels que des fruits, depuis le sol, comprenant une unité de retenue (15, 2) supportant de manière fixe ou avec faculté de pivotement un récipient de collecte (3) selon au moins une des revendications 1 à 12.
